# EUROPEAN PATENT SPECIFICATION

(11) **EP 1 629 949 B1**
(45) Date of publication and mention of the grant of the patent: **20.10.2010**
(21) Application number: 04020621.1
(22) Date of filing: 31.08.2004
(51) Int. Cl.: B25J 13/02, G06F 3/00

(54) **Haptic interface device**
Haptische Schnittstellenvorrichtung
Dispositif d'interface haptique

(43) Date of publication of application: 01.03.2006
(73) Proprietor: SCUOLA SUPERIORE DI STUDI UNIVERSITARI E DI PERFEZIONAMENTO S. ANNA, 56127 Pisa (IT)
(72) Inventor: Frisoli, Antonio, 56100 Pisa (IT); Salsedo, Fabio, 04100 Latina (LT) (IT); Bergamasco, Massimo, 56011 Castelmaggiore Calci (PI) (IT); Simoncini, Francesco, 55050 Fagnano (LU) (IT)
(74) Representative: Celestino, Marco

(56) References cited:
- WO-A-95/20788
- WO-A-99/21478
- US-A- 6 104 379

## Description

### Field of the invention

The present invention relates to a human-computer interface device.

In particular, the invention relates to an human-computer interface device of the haptic kinesthetic type, capable i.e. of engaging directly with a human who manoeuvres it, exchanging mechanical energy through predetermined areas of contact.

### Background of the invention

Haptic interfaces are known consisting of stiff links connected by means of rotating or sliding joints, in such a way to be similar to certain common manipulating robots.

The main functions that they carry out are:
- tracking the points of contact of the interface with the user, i.e. detecting the position and the orientation of such points of contact;
- generating a force feedback, i.e. a replication on the user of haptic/ kinesthetic sensations responsive to the contact during the manipulation of real or virtual objects;
- if the objects are real and then the interaction is carried out directly with a physical environment, this is called "teleoperation", whereas if such objects and the whole environment are reproduced by means of computers and electronic visual systems, this is called "virtual reality".

Teleoperation provides a bilateral communication between a manipulating robot, so-called "slave", operating in a remote environment and an interface, so called "master", controlled by the user. This gives the robot the capacity of carrying out operations of high skill and not foreseeable, on objects and on not structured environments, whose form, size, spatial arrangement and presence of obstacles are unknown a priori.

Furthermore, since the master and the slave can communicate even if located at a considerable distance, for example by means of radio/satellite broadcasting, operations can be carried out safely even in dangerous or difficult places, such as in the maintenance of nuclear power plants or in satellites.

Virtual reality can be, instead, defined as an interactive and immersive experience in a virtual environment.

In a virtual environment the presence of the objects is simulated by a computer. In fact, a computer is used for creating a virtual environment, for example with walls and objects that a graphical and haptic representation (avatar) of an user of an interface device can touch operated by the user same. The fields of application of virtual reality are many. Among them the following can be cited: simulation, training, medicine, entertainment, teaching, design, etc.

In the simplest prior art interface devices an user manipulates an interaction element (end effector), for example a joystick, or a mouse or a pen. On the interaction element sensors are mounted that detect movements thereof and transmit responsive signals to a computer, in order to simulate such an interaction of the user with the objects of the virtual environment that are shown on the computer screen.

To give the user realistic stimuli of the targeted virtual object, some existing devices are capable of transmitting a force feedback on the user. A force feedback is the replication on the user of "haptic" sensations responsive to the contact with real or virtual objects.

A possible embodiment provides a serial structure in which the degrees of freedom are monitored in turn. More in detail, a first main axis is taken as axis of reference for a second main axis, which in turn is the axis of reference for a third main axis. The third main axis is then used as reference for the further three degrees of freedom used for determining the orientation in space of the reference element.

The haptic interface devices of prior art belong to two classes:
- "desktop" not portable systems, having a limited number of points of contact and limited capacity of generating forces that are generically oriented in space, controlling their direction and intensity; they have normally a fixed support usually located on a rest plane, such as a writing desk, from which a mechanism extends with many degrees of freedom constrained to the fixed support at one end and connected at the other end in the point of interaction with the user;
- "exoskeleton" portable systems, more compact and lighter than the previous, with many points of contact, but incapable to control the direction of the forces to apply to the points of contact, and which depend on the actual geometric configuration.

In particular, two devices of prior art belong to the category of desktop "non portable" systems:
- a serial interface, as described in W09510080, with three actuated degrees of freedom for applying forces generically oriented in space at the end of the last link. An "end-effector" can orient freely about the centre of a passive spherical wrist and consists of a pen or a finger capsule in which the last phalanx of the finger of the user is housed. The device is operated by three DC motors, of which the first two motors exploit a "capstan" transmission for controlling the orientation of a pantograph mechanism that is bent in either direction by the third motor. For handling the position of the end-effector optical encoders are used fitted on the axes of the motors. This device has the drawback of a limited field of action for the user, i.e. the ratio between the size of the interface and the "work space" within which the user can engage with the virtual environment. Furthermore, such a kinematical solution affects the conditioning of the ellipsoid of manipulability.
- an interface, as described in EP1452949, with three degrees of freedom driven by three DC motors and three passive degrees of freedom concentrated in the spherical pivot at the end-effector, which is an articulated finger capsule. The motors are equipped with incremental encoders fitted directly on the axis. The kinematic structure has two rotational couplings and a sliding coupling. This device allows to obtain workspaces wider than in previous devices.

Instead, the following haptic interfaces belong to the category of the exoskeleton systems:
- a system to generate forces on medial and distal phalanxes of the fingers of a hand, except from the little finger. This system consists of a structure connected on the back of the hand from which links extend that are interfaced with the phalanxes. The system uses a serial kinematics with rotational couplings and has five degrees of freedom for each finger, of which two are active and coupled to each other. The forces are transmitted by means of sheathed tendons and are generated by four DC remote motors arranged in a box;
- a system, described in WO9412925, capable of applying forces on all the phalanxes of the five fingers of the hand, have a sheathed tendon actuating system similar to that of the previous example, but with a mechanism consisting of three passive joints, which form, along with an inter-phalanx finger joint, a four axes tendon-actuated closed mechanism. The interface is obtained arranging in series two of these structures for the thumb, and three for each of the other fingers of the hand.
- a further system particularly light and compact having four pneumatic pistons, integrated with linear position sensors, located in the palm of the hand to generate forces on the tip of the thumb, index, medium and ring fingers;
- another system, described in W09510396, comprises four exoskeletons, one for each finger of the hand except from the little finger, consisting of serial kinematical chains formed by rotational couplings with 10° of freedom each, of which three actuated. The device is connected dorsally on the hand and is capable of transmitting unidirectional forces to the proximal, medial and distal phalanxes. The system uses DC motors with a tendons and pulleys transmission. The measurement of the relative angular positions between the links is made by potentiometers and the forces are determined by strain gauges connected on cantilevers integrated in the links.

A similar device is disclosed in US-A6104379. A limit to the described devices of the not portable desktop type is that, even if they can generate forces which are generically oriented in space, they cannot track and generate forces on more than one point of a finger of the user, owing to problems of encumbrance and input or output data management from the control unit; furthermore, the interaction with the user is limited by the fact that the interface is constrained to a fixed support.

Instead, a limit to the above described exoskeleton systems is that, even if they are not much bulky and have many points of contact, they are incapable to control the direction of the forces to apply to the points of contact, because they depend on the geometric configuration.

For the above reasons, the need is felt of a device that is capable of generating forces generically oriented in space tracking more than one point of contact, and controlling the direction and the intensity of the forces.

Finally, such prior devices transmit vibrations and have a structure that is not much precise and reliable.

WO95/20788 discloses an exoskeleton where the back of a user is connected to the user's upper arm and the forearm by a kinematical chain comprising motors. Moreover, the forearm supports contact elements for three fingers, through three respective kinematical chains. However, neither the finger end contact elements, nor the kinematical chains of the fingers have means for generating forces or means for sensing forces in the links for the fingers, which operate passively.

### Summary of the invention

It is therefore a feature of the present invention to provide a haptic interface device capable of generating contact forces generically oriented in space at least on one point of contact located on the hand of a user.

It is another feature of the present invention to provide such a device which has size, configuration, kinematics and material that optimizes the performances and at the same time minimizes the weight and the overall volume.

A further feature of the present invention is to provide a haptic interface capable of assuring a wide freedom of movement to the hand of the user maintaining competitive performances with respect to systems present on the market and also capable to be implemented invariably to different anthropometric dimensions of the user, without the need of further regulations.

It is, still, a feature of the present invention to provide a device whose mobility allows to track points of contact with the user in case of bending/extending movement of the phalanxes of the fingers and of bending/extending movement and supination/pronation of the articulation of the wrist.

It is another feature of the present invention to provide an device with innovative mechanical features such that the mechanical backlash is slight, the friction is remarkably low, and the transparency and isotropy factors are very high.

It is, yet, a feature of the present invention to provide a haptic interface device that assures a safe operation by the user, concealing about completely the transmissions between its parts in the device structure.

These and other features are accomplished with one exemplary haptic interface device, according to the invention, suitable for exchanging with the user forces generically oriented in space in at least one point of contact with the user, for virtual reality or teleoperation systems, comprising:
- a support suitable for being connected to the forearm of a user;
- at least one kinematical serial chain of at least three stiff links, said chain having a first end pivotally connected to said support and a second free end, which is suitable for holding a point of contact with the user, so that said second free end has at least three degrees of freedom with respect to said support;
- an interaction element arranged between the interface and the user at said second end;
- means for measuring at least one force/relative position value at said interaction element responsive to the relative position of the stiff links;
- means for generating forces respectively associated to said at least three degrees of freedom;
- means for transmitting said forces between said means for generating forces and said stiff links;
- a control unit that generates, responsive to the force/position measured value, corresponding driving stimuli to said means for generating forces,

Preferably, from said support at least two different kinematical chains extend.

In a preferred exemplary embodiment, said at least two kinematical chains comprise each at least three stiff links connected in series with respect to each other and to said support.

Said support is advantageously a stiff rod, fixed to the user's arm and to whose end said kinematical chains are connected.

Advantageously, said at least three degrees of freedom of said second free end with respect to said support are obtained from the relative rotation of the stiff links by means of pivot joints.

In particular, said support comprises, at opposite sides with respect to the user's arm, two drive units formed each by three motors, each unit being dedicated to operate the link of the respective kinematical chain.

Preferably, a first link, of said at least three links, comprises a bracket portion with a first end constrained pivotally to said support from a first rotational joint with axis parallel to that of said motors, and a second end constrained pivotally to said second link by a rotational joint with axis perpendicular to the axis of said first rotational joint, and has an elongated portion that holds the means for transmitting force integral to said second link.

In a particular exemplary embodiment, a second link, of said at least three links, comprises an arm with a first end pivotally connected to said first link from a first rotational joint and a second end pivotally connected to said third link by a second rotational joint with axis perpendicular to the axis of said first rotational joint.

Advantageously, a third link, of said at least three links, comprises an arm having a first end pivotally connected to said second link and integral to said means for transmitting forces between said second link and said third link, and a second end consisting of said free end of the kinematical chain.

Advantageously, said means for transmitting the forces associated to each of said pivot joints comprise a circle sector having axis of rotation coincident with that of the corresponding rotational joint, and actuating means that transmit to each sector forces generated by said motors and transmit back to said motors components of movement of said point of contact.

In particular, the actuating means are selected from the group:
- tendons;
- gearings;
- friction wheels;
- belts or chains;
- electro-magnetic transmissions;
for operating the circular sectors.

Advantageously, the interaction element is connected to the second free end with respect to which it has at least one mobility degree, the second free end being capable of moving, in turn, according to three degrees of freedom with respect to the fixed base though the kinematical serial chain formed with the three stiff links and the support.

In particular, the three degrees of freedom of the second free end with respect to the support determines the position of the interaction element in space, whereas the or each mobility degree of the interaction element with respect to the free end detects the orientation of the interaction element in space.

In a possible exemplary embodiment, the interaction element has three degrees of rotational mobility with respect to the free end of the kinematical chain, creating a spherical pivot.

Advantageously, the interaction element is selected from the group of a finger capsule, a pen, a handle, a glove.

Preferably, the means for generating the forces are independent motors that drive respective shafts on which the tendons are wound.

Advantageously, means are provided for measuring the position in space of the interaction element selected from the group of encoders, resolvers, potentiometers, etc.

In particular, the means for generating the forces on the rotational degrees of freedom of the stiff links are integral to the support.

In a preferred exemplary embodiment, the interaction element is a finger capsule holder connected to the free end of the kinematical chain by at least one degree of freedom, having a housing in which a capsule is engaged
in which the user puts the desired finger. This way, the interaction element can be adapted to the finger of different users, or to different fingers of a same operator, simply replacing the capsule, which has a same outer diameter but with a suitable housing diameter.

### Brief description of the drawings

Further characteristics and the advantages of the haptic interface device, according to the present invention will be made clearer with the following description of an exemplary embodiment thereof, exemplifying but not limitative, with reference to the attached drawings, in which like reference characters designate the same or similar parts, throughout the figures of which:
- figure 1 shows a perspective view of a haptic interface device according to the invention;
- figure 2 shows a diagrammatical kinematical view of the two chains;
- figure 3 shows the detail of an interaction element arranged between the interface and the user;
- figures 4a and 4b show diagrammatically the motion of the tendons at the rotational joint at the second end of the second link;
- figure 5 shows an elevational side detailed view comprising the first link of one of the two kinematical chains, outlining the motion of the tendons;
- figure 6 shows a top plan view of the same detail of figure 5;
- figures 7 and 8 show diagrammatically the arrangement of idle pulleys and the motion of tendons used for transmitting the forces between the first and second link;
- figure 9 shows a block diagram that describes the configuration of the system actuating the haptic interface.
- figure 10 shows an example of application of the invention for virtual reality.

### Description of a preferred exemplary embodiment

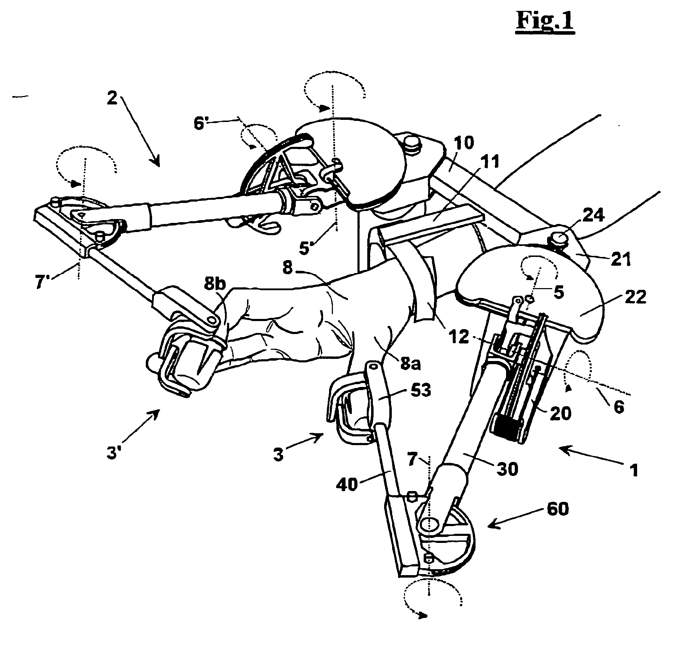

In figure 1 a possible exemplary embodiment is shown of a haptic interface device suitable for exchanging with an user forces that are generically oriented in space, comprising a couple of kinematical open chains 1 and 2, symmetrically connected to a support 10. This rod shaped support can be fixed to the forearm 4 of an user by an elongated portion 11 having at the end two clamps 12, for example tear-off straps.

The two kinematical chains 1 and 2 are articulated respectively at axes 5, 6, 7 and 5', 6', 7', and end with a respective interaction element 3 and 3'. Since they are specularly equal, hereinafter only chain 1 is described.

In particular, kinematical chain 1 has three links 20, 30 and 40, and is characterized by three actuated degrees of freedom, distributed on the three links, and three passive degrees of freedom, concentrated in interaction element 3. In particular, one of the distal phalanxes of the hand of the user is put on the free end of the kinematical chain. This way the haptic interface has completely twelve degrees of freedom, six for each of the two kinematical chains.

First link 20 is a bracket pivotally connected to a base 21 integral to support 10. It can rotate about an axis 5 perpendicular to support 10. Second link 30 is elongated and is obtained from a tubular stem with a first end pivotally connected to first link 20 by a rotational joint with axis 6, and a second end pivotally connected to third link 40 by a rotational joint with axis 7, perpendicular to that of the first end. The rotational couplings of each link are orthogonal to each other.

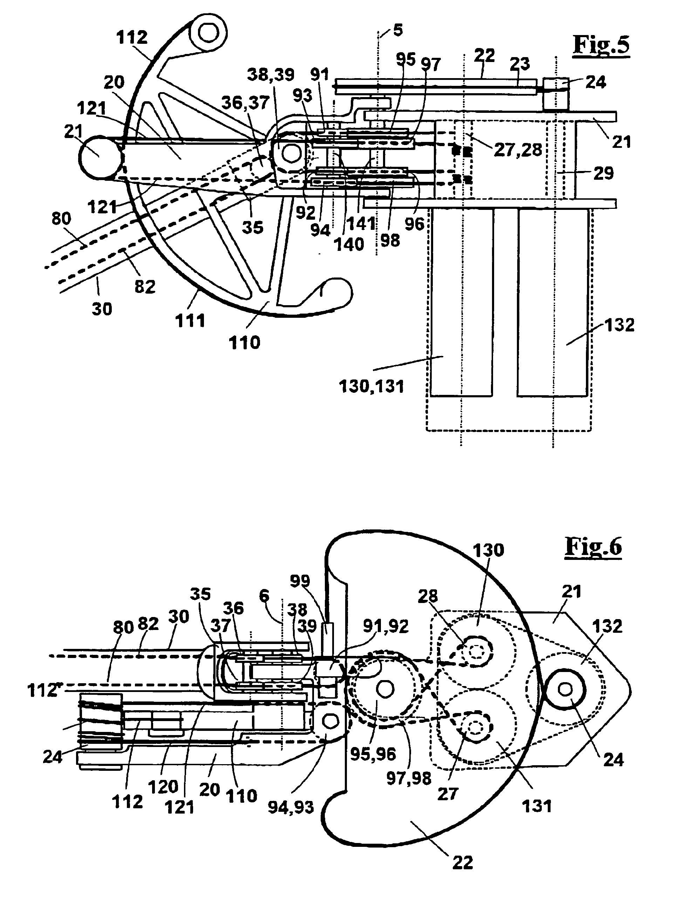

Each of the two kinematical chains 1 and 2 of the haptic interface comprises a drive unit of three rotational motors 130, 131, 132 (shown in figure 5) arranged at each of the two ends of support 10. The forces generated by said rotational motors are, moreover, transmitted to the joints of the kinematical chain by a system such as: tendons, "capstan" operated circular sectors and idle pulleys.

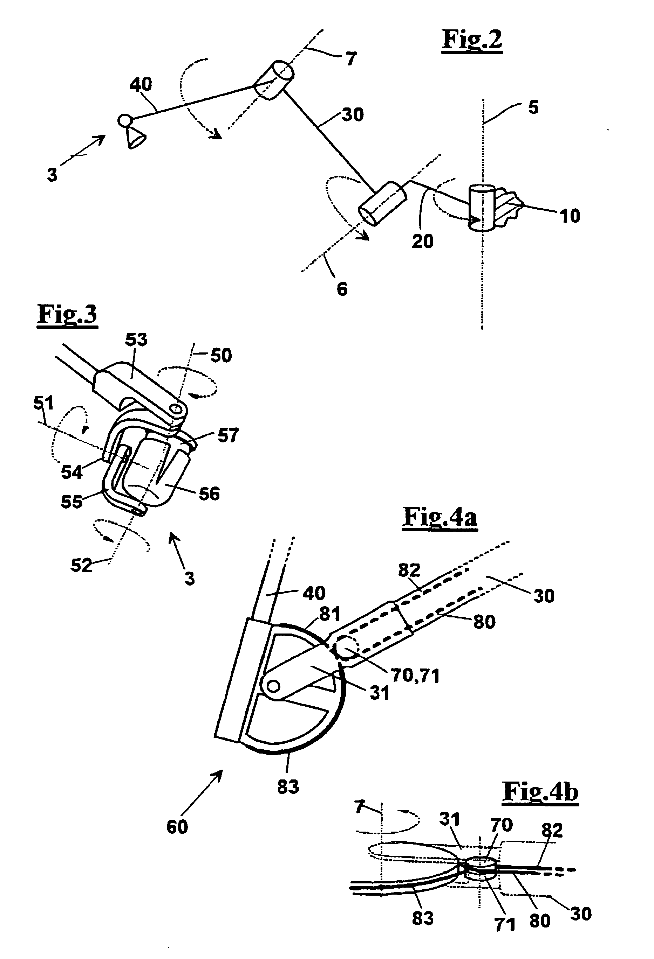

Figure 2 is a diagrammatical kinematical view of the two open chains, in particular of kinematical chain 1. It comprises a link 20 pivotally connected to a fixed part, for example to support 10, by a rotational joint with axis 5 perpendicular to support 10. Link 30 is connected to link 20 by a rotational joint with axis 6 perpendicular to axis 5. Link 30 is pivotally connected to link 40 by a rotational joint with axis 7 perpendicular to axis 6. Then the links 20 and 30 have, at the respective ends, rotational couplings having axes perpendicular to each other. At the free end of the kinematical chain interaction element 3 is arranged, defining substantially a ball joint.

In figure 3 the detail is shown of the user interaction element 3, comprising three elements, of which the first 53 is connected to the third link 30 of kinematical chain 2, the second element 54 is pivotally connected to the first 53, the third element 55 is pivotally connected to the second 54 and holds a capsule holder 56, free of rotating about its axis 52, in which a capsule 57 can be put, which fits capsule holder 56, and where the user can put the desired finger. This way, interaction element 3 can be adapted to the finger of different users, or to different fingers of a same operator, simply replacing the capsule 57 with another having an outer diameter that fits capsule holder and a customized inner diameter. Therefore, said interaction element 3, having three rotational axes 50, 51 and 52, in turn incident and perpendicular with one another, is a spherical pivot allowing the distal phalanx of the hand of the user to follow freely the free end of kinematical chain 2.

With reference again to figure 1, it is apparent how the user, which wears the interface according to the invention, can independently put two distal phalanxes of the hand 8 (in figure the thumb 8a and the index 8b) and can move them independently, each with 6 degrees of freedom, of which three actuated, with respect to the support connected to the forearm.

Figure 4a shows a detail of the joint between second link 30 and third link 40 of kinematical chain 2. In particular, said joint comprises a circle sector 60 integral with third link 40 of kinematical chain 2, and is brought into rotation about its axis 7 by the opposite action of two tendons 80 and 82, a part of which fits the cylindrical periphery of the circle sector and in part fit two idle pulleys 70 and 71, located within a sleeve 31 connecting second link 30 and the circle sector 60, said pulleys leading the tendons through the recess of the tubular portion of second link 30 of kinematical chain 2.

More in detail, in figure 4b, the arrangement is shown of the tendons near the joint between second link 30 and third link 40. In particular a first portion 83 of tendon 82 remains on the cylindrical surface of circle sector 60, a second portion remains on idle pulley 71 and then proceeds to second link 30. In the same way, a first portion of tendon 80 remains on the part resting on the side surface of sector 60, a second portion remains on idle pulley 70 and then proceeds to second link 30. The differential action of tendons 80 and 82 causes circle sector 60 to rotate about its axis 7.

Figures 5 and 6 show the detail of the combination of first link 20 of kinematical chain 2, with a base 21, the first two joints and the means for transmitting the forces between the motors and the links. In particular figure 5 shows a unit comprising base 21 to which rotational motors 130, 131 and 132 are connected, first link 20 with sector 22 to which it is integral, second link 30 with sector 110 to which it is integral. Motor 132, by shaft 29 or a possible gearing, causes the rotation of drum 24 on which coils are wound of tendon 23, which fits sector 22 and has a tension adjustment 99. The sector 22, by pin 141, is integral to first link 20. Then the rotation of drum 24 operates the rotation of first link 20 in a plane perpendicular to that of the figure same, about pin 141. A second link 30 is pivotally connected to a second end of link 20 through support 35 integral to circle sector 110. Motor 131 causes the rotation of drum 27 on which coils are wound of tendons 120 and 121, which after drum 27, pass respectively idle pulleys 97, 93 and 98, 94 for causing the rotation of drum 21, on which they are partially wound. Drum 21, operated in the in the described way, causes the rotation of circle sector 110, which is integral to second link 30, by the tendon that fits at 112 to sector 110, then has coils wound about drum 21 and then adheres at 111 again to sector 110. Sector 110 has a not shown tension adjustment system for the tendon.

Motor 130 causes the rotation of drum 28, on which coils are wound of tendons 80 and 82. These, after drum 28, fit respectively idle pulleys 96, 92 and 95, 91 and then proceed to idle pulleys 39, 37 and 38, 36, after which it reaches the joint between second link 30 and third link 40 of kinematical chain 2, in order to transmit the forces to sector 60 of figure 1.

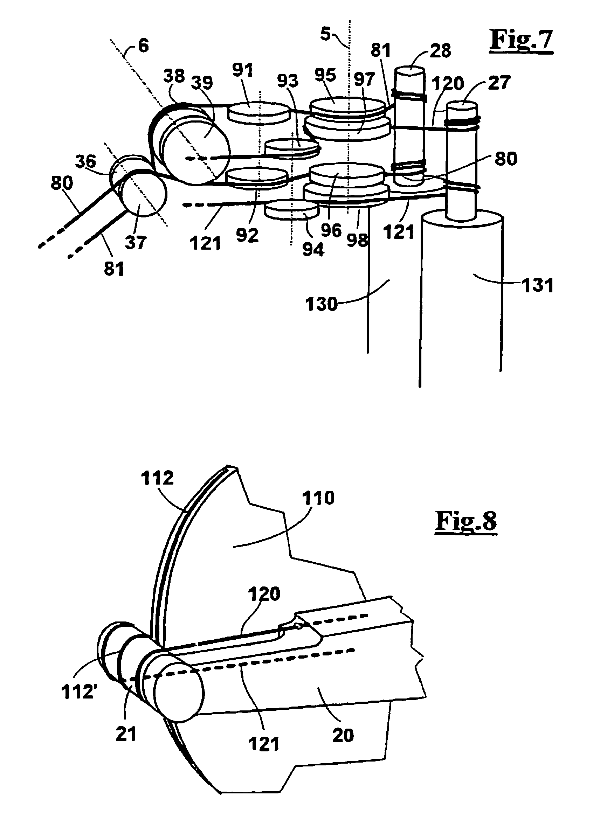

Figure 7 shows in more detail the arrangement of the idle pulleys and of the tendons near the first link. In particular, motor 131 causes the rotation of the drum 27 on which an end of the tendon 120 and an end of the tendon 121 are wound. Tendon 120, starting from drum 27, touches first with idle pulley 97, then pulley 93 and then drum 21 of figure 8. Tendon 121, instead, passes first on pulley 98, then pulley 94, and then at the drum of figure 8. Motor 130 causes the rotation of drum 28 on which are wound the end of tendons 81 and 80 are wound. Tendon 81, after drum 28, passes on pulley 95, then pulley 91 and then pulleys 38 and 36, for transmitting an actuating force to the joint between the second and the third link (respectively 30 and 40). Tendon 80, after drum 28, passes in turn on pulleys 96, 92 39 and 37, reaching then the joint between link 30 and link 40.

In figure 8 the detail is shown of the motion of the tendons near sector 110. The tendons 120 and 121 cause the rotation of drum 21, which in turn causes the rotation of circle sector 110, by the action of tendon 112, partially wound on drum 21 at 21'.

With reference again to figure 1, it is apparent how the three degrees of freedom about axes 5, 6 and 7 of kinematical chain 1, and the respective three about axes 5', 6' and 7', of kinematical chain 2, are controlled by motors 130, 131 and 132 both concerning the position, by means of encoders not shown to them associated, and concerning force feedback by the motors same. This way, the point of contact at the end of each kinematical chain has three degrees of freedom with control of force and position.

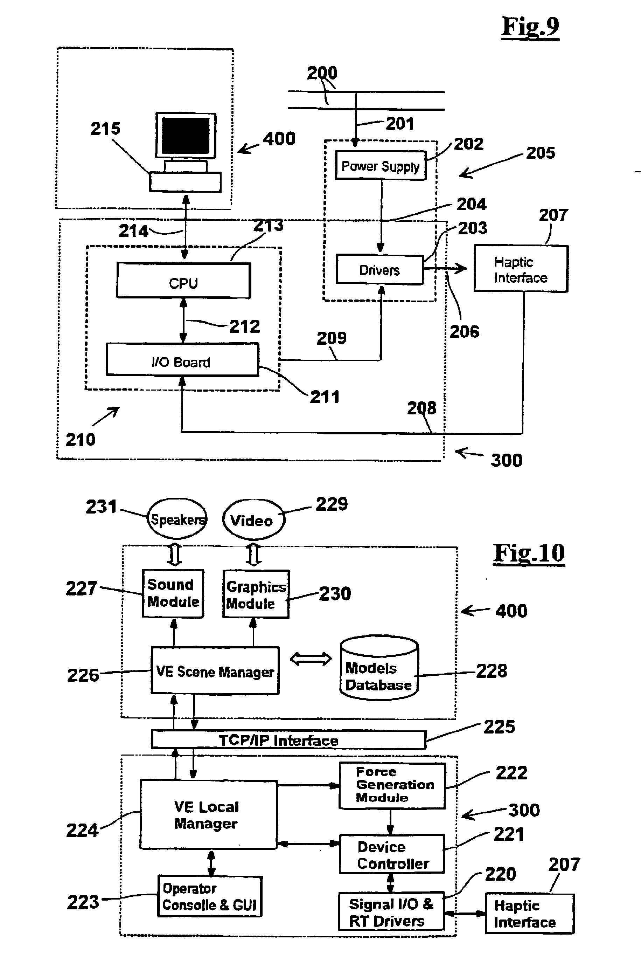

Figure 9 shows a block diagram that describes the configuration of the system actuating the haptic interface. In particular a power block 205 and a control block 210 communicate with each other through connections 209 and 208. Power block 205 is connected to the energy supply AC network 200, by a connection 201. The power block comprises a "power supply" block 202, which changes the DC voltage supply and feeds, by connection 204, a "drivers" block 203, which feeds the motors of the haptic interface 207. The motors of the haptic interface comprise sensors of angular position that allow to obtain the position of the link that forms the kinematical chain, not shown in the figure. The resulting data are transferred to control block 210 by a connection 208 and, in particular, are stored in acquisition board "I/O Board" 211, which include a digital-to-analog converter to generate a continuous voltage signal to send to the "drivers" block 203, this signal representing an information of the required force from the motors of the haptic interface. The control block 210 comprises a "CPU" 213 that, communicates with acquisition board 211 by an "internal bus" 212, and computes the input and output data.

By using the interface as a master node in virtual reality or teleoperation, indicated as 300, it can interface with a node 400, for example a computer or a "slave" node.

An example of application for virtual reality is described in figure 10 for nodes 300 and 400, which interface by means of a TCP/IP protocol 255. In particular, by haptic interface 207 it is possible to affect node 400, where loaded models 228 create constraints on a scene operated by a manager 226, through a graphic module 230, on a video device 229. The interaction with the scene is made through the user that wears interface 207, receiving by the constraints a feedback force, generated by module 222 and transmitted by controller 221 through driver 220. The setting of the system can be made from consolle 223 through the local manager 224, which is interfaces, with TCP/IP protocol, to manager 226 of node 400. A sound card 227, by a speaker 231, plays sounds and instructions responsive to the interaction of the user, by the interface 207, according to the imposed virtual constraints.

In a similar way, but not shown, a system of teleoperation can be arranged.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A haptic interface device, for virtual reality or teleoperation systems, comprising:
- a support (10) suitable for being connected to the forearm (4) of a user;
- at least one kinematical serial chain (1, 2) of at least three stiff links (20, 30, 40) connected by rotational couplings, said chain (1, 2) having a first end pivotally connected to said support (10) and a second free end, wherein said second free end has at least three degrees of freedom with respect to said support (10)
- at least one point of contact with at least one finger (8A, 8B) of the hand (8) of the user, said point of contact being located at said second end and comprising an interaction element (3, 3');
**characterised in that**
means are provided for exchanging with a user forces generically oriented in space in said or each point of contact located on the fingers of the hand (8) of the user,
said means for exchanging comprising:
- means for measuring at least one value of force/relative position at said interaction element responsive to the relative position of the stiff links (20, 30, 40);
- means for generating forces respectively associated to said at least three degrees of freedom;
- means for transmitting said forces between said means for generating forces and said stiff links (20, 30, 40);
- a control unit, responsive to the force/position measured value, which generates driving stimuli corresponding to said means for generating forces; and **in that**
- the rotational couplings of each link (20, 30, 40) are orthogonal to each other.

2. A haptic interface device, according to claim 1, wherein from said support (10) at least two different kinematical chains extend (1, 2).

3. A haptic interface device, according to claim 2, wherein, said at least two kinematical chains (1, 2) comprise each at least three stiff links (20, 30, 40) connected in series with respect to each other and to said support (10).

4. A haptic interface device, according to claim 1, wherein said support (10) comprises a stiff rod (11), fixed to the user's arm and to whose end said kinematical chains (1, 2) are connected.

5. A haptic interface device, according to claim 1, wherein said at least three degrees of freedom of said second end with respect to said support (10) are obtained from the relative rotation of the stiff links (20, 30, 40) by means of pivot joints where the first and the second stiff links (20, 30, 40) have each two pivot joints orthogonal to each other.

6. A haptic interface device, according to claim 1, wherein said support (10) comprises, at opposite sides with respect to the user's arm (8), two drive units formed each by three motors (130, 131, 132), each unit being dedicated to operate the respective kinematical chain.

7. A haptic interface device, according to claim 1, wherein a first link (20), of said at least three links (20, 30, 40), comprises a bracket portion with a first end constrained pivotally to said support (10) by a respective rotational joint with axis (5) orthogonal to a plane that contains the support (10), and a second end constrained pivotally to said second link (30) by a respective rotational joint with axis (6) perpendicular to the axis of the rotational joint of the first end, and has an elongated portion that holds the means for transmitting forces integral to said second link (30).

8. A haptic interface device, according to claim 1, wherein a second link (30), of said at least three links (20, 30, 40), comprises an arm with a first end pivotally connected to said first link (20) by a rotational joint and a second end pivotally connected to said third link (40) by a respective rotational joint with axis (7) perpendicular to the axis (6) of the rotational joint of the first end.

9. A haptic interface device, according to claim 1, wherein a third link (40), of said at least three links (20, 30, 40) comprises an arm having a first end pivotally connected to said second link (30) and integral to said means for transmitting forces between said second link (30) and said third link (40), and a second end consisting of said free end of the kinematical chain (1, 2).

10. A haptic interface device, according to claim 1, wherein said means for transmitting the forces associated to each of said pivot joints comprise a circle sector having axis of rotation coincident with that of the corresponding rotational joint, and actuating means that transmit to each sector forces generated by said motors (130, 131, 132) and transmit back to said motors (130, 131, 132) components of movement of said point of contact.

11. A haptic interface device, according to claim 1, where the interaction element (3) is selected from the group of a pen, a handle, a glove, a finger capsule (56) having three degrees of rotational mobility (50, 51, 52) with respect to the free end (53) of the kinematical chain (1, 2), creating a spherical pivot.

12. A haptic interface device, according to claim 1, where the means for generating the forces are independent motors (130, 131, 132) that drive respective shafts on which tendons (80, 81, 82, 120, 121) are wound.

## Patentansprüche

1. Eine haptische Schnittstellenvorrichtung für virtuelle Realität oder für Teleoperationssysteme, mit:
- einer Halterung (10), die für eine Verbindung mit dem Vorderarm (4) eines Anwenders geeignet ist,
- mindestens einer seriellen kinematischen Kette (1,2) von mindestens drei steifen Verbindungsgliedern (20,30, 40), die durch Drehkupplungen verbunden sind, wobei die Kette (1,2) ein erstes Ende, das schwenkbar mit der Halterung (10) verbunden ist, und ein zweites freies Ende besitzt, wobei das zweite freie Ende mindestens drei Freiheitsgrade bezüglich der Halterung (10) besitzt,
- mindestens einem Kontaktpunkt mit mindestens einem Finger (8A,8B) der Hand (8) des Anwenders, wobei sich der Kontaktpunkt an dem zweiten Ende befindet und ein Interaktionselement (3,3') aufweist,
**dadurch gekennzeichnet, daß**
Mittel vorgesehen sind zum Austauschen von Kräften, die gewöhnlich im Raum orientiert sind, mit einem Anwender in dem oder jedem Kontaktpunkt, der sich an den Fingern der Hand (8) des Anwenders befindet,
wobei die Mittel zum Austauschen umfassen:
- Mittel zum Messen mindestens eines Werts von Kraft/Relativposition an dem Interaktionselement in Reaktion auf die Relativposition der steifen Verbindungsglieder (20,30,40),
- Mittel zum Erzeugen von Kräften, die jeweils den mindestens drei Freiheitsgraden zugeordnet sind,
- Mittel zum Übertragen der Kräfte zwischen den Mitteln zum Erzeugen von Kräften und den starren Verbindungsgliedern (20,30,40),
- eine Kontrolleinheit, die in Reaktion auf den gemessenen Wert der Kraft/Position Antriebsstimuli entsprechend den Mitteln zum Erzeugen von Kräften erzeugt, und daß
- die Drehkupplungen jedes Verbindungsglieds (20,30,40) orthogonal zueinander sind.

2. Eine haptische Schnittstellenvorrichtung gemäß Anspruch 1, wobei sich von der Halterung (10) mindestens zwei unterschiedliche kinetische Kette erstrecken (1,2).

3. Eine haptische Schnittstellenvorrichtung gemäß Anspruch 2, wobei die mindestens zwei kinematischen Kette (1,2) jeweils mindestens drei starre Verbindungsglieder (20,30,40) umfassen, die in Serie miteinander und bezüglich der Halterung (10) verbunden sind.

4. Eine haptische Schnittstellenvorrichtung gemäß Anspruch 1, wobei die Halterung (10) einen starren Stab (11) umfaßt, der an dem Arm des Anwenders befestigt ist und an dessen Ende die kinematischen Kette (1,2) verbunden sind.

5. Eine haptische Schnittstellenvorrichtung gemäß Anspruch 1, wobei die mindestens drei Freiheitsgrade des zweiten Endes bezüglich der Halterung (10) erhalten werden aus der Relativdrehung der starren Verbindungsglieder (20,30,40) mittels Schwenkverbindungen, wobei die ersten und zweiten starren Verbindungsglieder (20,30,40) jeweils zwei zueinander orthogonale Schwenkverbindungen besitzen.

6. Eine haptische Schnittstellenvorrichtung gemäß Anspruch 1, wobei die Halterung (10) an gegenüberliegenden Seiten bezüglich dem Arm (8) des Anwenders zwei Antriebseinheiten aufweist, die jeweils durch drei Motoren (130,131,132) gebildet sind, wobei jede Einheit zum Betätigen der jeweiligen kinematischen Kette bestimmt ist.

7. Eine haptische Schnittstellenvorrichtung gemäß Anspruch 1, wobei ein erstes Verbindungsglied (20) der mindestens drei Verbindungsglieder (20,30,40) einen Befestigungsabschnitt besitzt, bei dem ein erstes Ende schwenkbar an der Halterung (10) durch eine jeweilige Drehverbindung mit einer Achse (5) festgelegt ist, die orthogonal zu einer Ebene ist, welche die Halterung (10) enthält, und bei dem ein zweites Ende schwenkbar an dem zweiten Verbindungsglied (30) durch eine jeweilige Drehverbindung mit einer Achse (6) festgelegt ist, die senkrecht ist zu der Achse der Drehverbindung des ersten Endes, und einen länglichen Abschnitt aufweist, der die Mittel zum Übertragen von Kräften, die integral mit dem zweiten Verbindungsglied (30) sind, hält.

8. Eine haptische Schnittstellenvorrichtung gemäß Anspruch 1, wobei ein zweites Verbindungsglied (30) der mindestens drei Verbindungsglieder (20,30,40) einen Arm aufweist, bei dem ein erstes Ende schwenkbar mit dem ersten Verbindungsglied (20) durch eine Drehverbindung schwenkbar verbunden ist, und ein zweites Ende schwenkbar mit dem dritten Verbindungsglied (40) durch eine jeweilige Drehverbindung mit einer Achse (7) schwenkbar verbunden ist, die senkrecht zu der Achse (6) der Drehverbindung des ersten Endes ist.

9. Eine haptische Schnittstellenvorrichtung gemäß Anspruch 1, wobei ein drittes Verbindungsglied (40) der mindestens drei Verbindungsglieder (20,30,40) einen Arm umfaßt, bei dem ein erstes Ende schwenkbar mit dem zweiten Verbindungsglied (30) verbunden ist und der integral mit den Mitteln zum Übertragen von Kräften zwischen dem zweiten Verbindungsglied (30) und dem dritten Verbindungsglied (40) ist, und bei dem ein zweites Ende aus dem freien Ende der kinematischen Kette (1,2) besteht.

10. Eine haptische Schnittstellenvorrichtung gemäß Anspruch 1, wobei die Mittel zum Übertragen der Kräfte, die jedem der Schwenkverbindungen zugeordnet sind, einen Kreissektor umfassen, der eine Drehachse besitzt, die mit der der entsprechenden Drehverbindung koinzidiert, und Betätigungsmittel, die auf jeden Sektor Kräfte übertragen, die von den Motoren (130,131,132) erzeugt werden, und die zu den Motoren (130,131,132) Komponenten der Bewegung des Kontaktpunkts zurück übertragen.

11. Eine haptische Schnittstellenvorrichtung gemäß Anspruch 1, wobei das Interaktionselement (3) aus der Gruppe mit einem Stift, einem Handgriff, einem Handschuh, einer Fingerkapsel (56) mit drei Graden von Rotationsmobilität (50,51,52) bezüglich dem freien Ende (53) der kinematischen Kette (1,2), welche eine sphärische Schwenkanordnung bilden, ausgewählt ist.

12. Eine haptische Schnittstellenvorrichtung gemäß Anspruch 1, wobei die Mittel zum Erzeugen der Kräfte unabhängige Motoren (130,131,132) sind, die jeweilige Achsen bzw. Wellen antreiben, auf die Spannglieder bzw. -kabel (80,81,82,120, 121) aufgewickelt sind.

## Revendications

1. Dispositif d'interface haptique, pour des systèmes de réalité virtuelle ou de téléopération, comprenant :
un support (10) approprié pour être raccordé à l'avant-bras (4) d'un utilisateur ;
au moins une chaîne cinématique (1, 2) en série d'au moins trois liaisons rigides (20, 30, 40) raccordées par des couplages rotatifs, ladite chaîne (1, 2) ayant une première extrémité raccordée de manière pivotante audit support (10) et une deuxième extrémité libre, dans lequel ladite deuxième extrémité libre a au moins trois degrés de liberté par rapport audit support (10),
au moins un point de contact avec au moins un doigt (8A, 8B) de la main (8) de l'utilisateur, ledit point de contact étant situé au niveau de ladite deuxième extrémité et comprenant un élément d'interaction (3, 3') ;
**caractérisé en ce que :**
on prévoit des moyens pour échanger avec un utilisateur, des forces généralement orientées dans l'espace dans ledit ou chaque point de contact situé sur les doigts de la main (8) de l'utilisateur,
lesdits moyens d'échange comprenant :
des moyens pour mesurer au moins une valeur de force / position relative au niveau dudit élément d'interaction en réponse à la position relative des liaisons rigides (20, 30, 40) ;
des moyens pour générer des forces respectivement associées auxdits au moins trois degrés de liberté ;
des moyens pour transmettre lesdites forces entre lesdits moyens pour générer des forces et lesdites liaisons rigides (20, 30, 40) ;
une unité de commande, sensible à la valeur mesurée de force / position, qui génère des stimuli d'entraînement correspondant auxdits moyens pour générer des forces ;
et **en ce que** :
les couplages rotatifs de chaque liaison (20, 30, 40) sont orthogonaux entre eux.

2. Dispositif d'interface haptique selon la revendication 1, dans lequel à partir dudit support (10), s'étendent au moins deux chaînes cinématiques différentes (1, 2).

3. Dispositif d'interface haptique selon la revendication 2, dans lequel lesdites au moins deux chaînes cinématiques (1, 2) comprennent chacune au moins trois liaisons rigides (20, 30, 40) raccordées en série les unes par rapport aux autres et audit support (10).

4. Dispositif d'interface haptique selon la revendication 1, dans lequel ledit support (10) comprend une tige rigide (11), fixée au bras de l'utilisateur et à l'extrémité de laquelle lesdites chaînes cinématiques (1, 2) sont raccordées.

5. Dispositif d'interface haptique selon la revendication 1, dans lequel lesdits au moins trois degrés de liberté de ladite deuxième extrémité par rapport audit support (10) sont obtenus à partir de la rotation relative des liaisons rigides (20, 30, 40) au moyen de joints de pivot où les première et deuxième liaisons rigides (20, 30, 40) ont chacune deux joints pivotants orthogonaux entre eux.

6. Dispositif d'interface haptique selon la revendication 1, dans lequel ledit support (10) comprend, au niveau des côtés opposés par rapport au bras (8) de l'utilisateur, deux unités d'entraînement formées chacune par trois moteurs (130, 131, 132), chaque unité étant dédiée pour actionner la chaîne cinématique respective.

7. Dispositif d'interface haptique selon la revendication 1, dans lequel une première liaison (20) desdites au moins trois liaisons (20, 30, 40), comprend une partie de console avec une première extrémité contrainte de manière pivotante sur ledit support (10) par un joint rotatif respectif avec l'axe (5) orthogonal à un plan qui contient le support (10), et une deuxième extrémité contrainte de manière pivotante sur ladite deuxième liaison (30) par un joint rotatif respectif avec l'axe (6) perpendiculaire à l'axe du joint rotatif de la première extrémité, et a une partie allongée qui maintient les moyens de transmission de forces, solidaires à ladite deuxième liaison (30).

8. Dispositif d'interface haptique selon la revendication 1, dans lequel une deuxième liaison (30), desdites au moins trois liaisons (20, 30, 40) comprend un bras avec une première extrémité raccordée de manière pivotante à ladite première liaison (20) par un joint rotatif et une deuxième extrémité raccordée de manière pivotante à ladite troisième liaison (40) par un joint rotatif respectif avec l'axe (7) perpendiculaire à l'axe (6) du joint rotatif de la première extrémité.

9. Dispositif d'interface haptique selon la revendication 1, dans lequel une troisième liaison (40), desdites au moins trois liaisons (20, 30, 40) comprend un bras ayant une première extrémité raccordée de manière pivotante à ladite deuxième liaison (30) et solidaire desdits moyens de transmission de force entre ladite deuxième liaison (30) et ladite troisième liaison (40), et une deuxième extrémité se composant de ladite extrémité libre de la chaîne cinématique (1, 2).

10. Dispositif d'interface haptique selon la revendication 1, dans lequel lesdits moyens de transmission de forces associés à chacun desdits joints pivotants comprennent un secteur circulaire ayant un axe de rotation coïncidant avec celui du joint rotatif correspondant, et des moyens d'actionnement qui transmettent à chaque secteur les forces générées par lesdits moteurs (130, 131, 132) et retransmettent auxdits moteurs (130, 131, 132) les composantes du mouvement dudit point de contact.

11. Dispositif d'interface haptique selon la revendication 1, dans lequel l'élément d'interaction (3) est choisi dans le groupe comprenant un stylo, une poignée, un gant, une capsule de doigt (56) ayant trois degrés de mobilité rotative (50, 51, 52) par rapport à l'extrémité libre (53) de la chaîne cinématique (1, 2), créant un pivot sphérique.

12. Dispositif d'interface haptique selon la revendication 1, dans lequel les moyens de génération de forces sont indépendants des moteurs (130, 131, 132) qui entraînent les arbres respectifs sur lesquels des tendons (80, 81, 82, 120, 121) sont enroulés.
